# EUROPEAN PATENT APPLICATION

(11) **EP 4 838 596 A1**
(43) Date of publication of application: **11.11.2026**
(21) Application number: 25751403.4
(22) Date of filing: 26.01.2025
(51) Int. Cl.: H01M 10/04

(54) **HIGH-SPEED WINDING PROCESS AND WOUND BATTERY CELL THEREFROM**

(30) Priority: 06.02.2024 CN 202410169141
(71) Applicant: Shenzhen Geesun Intelligent Technology Co., Ltd., Shenzhen, Guangdong 518000 (CN)
(72) Inventor: WU, Xueke, Shenzhen, Guangdong 518000 (CN); YANG, Rukun, Shenzhen, Guangdong 518000 (CN); CHEN, Fei, Shenzhen, Guangdong 518000 (CN); YANG, Ji, Shenzhen, Guangdong 518000 (CN); YAO, Bing, Shenzhen, Guangdong 518000 (CN); LI, Lipeng, Shenzhen, Guangdong 518000 (CN); HE, Shiming, Shenzhen, Guangdong 518000 (CN); HE, Yan, Shenzhen, Guangdong 518000 (CN); TAO, Shanghui, Shenzhen, Guangdong 518000 (CN); CHAO, Haoming, Shenzhen, Guangdong 518000 (CN)
(74) Representative: Chimini, Francesco
(86) International application number: PCT/CN2025/075263
(87) International publication number: WO 2025/167803

(57) **Abstract**

Embodiments of the present application relate to the technical field of wound battery cells, and provide a high-speed winding process and a wound battery cell. The winding process comprises the following continuously performed procedures: an electrode sheet connection procedure, a combining procedure, and a winding procedure. The connection procedure comprises: using a first connecting strip to connect the tail of a first cathode sheet segment and the head of a second cathode sheet segment, and using a second connecting strip to connect the tail of a first anode sheet segment and the head of a second anode sheet segment. The combining procedure comprises: combining the first connecting strip, a first separator, the second connecting strip, and a second separator to form a multi-layer structure strip. The winding procedure comprises: winding the multi-layer structure strip to form a battery cell, and cutting at the connection location between the first separator, the first connecting strip, the second separator, and the second connecting strip to start winding a next battery cell. The first connecting strip and the second connecting strip are both porous-structured connecting strips. The winding process provided by the embodiments of the present application enables high-speed winding and improves the performance stability of the prepared wound battery cells.

## Description

### CROSS-REFERENCE TO THE RELATED APPLICATIONS

The present invention claims priority to Chinese Patent Application No. 202410169141X, filed with the China National Intellectual Property Administration on February 6, 2024 and entitled "HIGH-SPEED WINDING PROCESS AND WOUND BATTERY CELL THEREFROM", the entire contents of which are incorporated herein by reference.

### TECHNICAL FIELD

The present invention relates to the technical field of battery winding, and in particular to a high-speed winding process and a wound battery cell therefrom.

### BACKGROUND

Existing bare battery cell winding processes mainly include anode feeding and cathode feeding on both sides, upper separator feeding and lower separator feeding. The anode and cathode are processed through feeding, tension control, electrode sheet length measurement, electrode sheet deviation correction, electrode sheet cutting, separator length measurement, separator deviation correction, electrode sheet and separator lamination(combining), automatic winding, separator cutting, tail taping, blanking, etc. However, in this winding process, when the battery cell completes winding and the separator is cut, the separator speed needs to be reduced to 0, and after the winding needle clamps the separator head, the separator can be cut. When starting to wind the next battery cell core, the process also needs to slowly accelerate from 0 until the electrode sheet enters the winding needle. Therefore, the winding speed is slow, and high-speed winding is difficult to achieve. Moreover, when the anode and cathode material strips are fed into the winding mechanism, since the heads of the anode and cathode are in a free state, the deviation correction effect is difficult to guarantee, affecting the alignment of the electrode sheet head with the separator in the battery cell.

To address this problem, in recent years, it has been proposed to connect cut electrode sheets by adhesive tape, connecting adjacent cut electrode sheet segments into a continuous whole, thereby providing a foundation for continuous winding, simultaneously reducing the need for electrode sheet and separator deviation correction, and also reducing electrode sheet powder dropping. However, during the winding process, it has been found that bubbles are prone to form between the adhesive tape and the electrode sheets as well as the separator, and these bubbles are not easily expelled, which has a significant impact on the performance of the battery cell, and therefore it is difficult to promote and use.

### SUMMARY

One of the objects of the present invention is to provide a new winding process for a battery cell structure that can achieve high-speed winding without affecting battery cell performance.

Another object of the present invention is to provide a wound battery cell. In a first aspect, the present invention discloses a high-speed winding process, comprising the following continuously performed procedures: an electrode sheet connection procedure, a combining procedure, and a winding procedure;
wherein the connection procedure comprises: using a first connecting strip to connect the tail of a first cathode sheet segment and the head of a second cathode sheet segment, and using a second connecting strip to connect the tail of a first anode sheet segment and the head of a second anode sheet segment;
the combining procedure comprises: combining the first connecting strip, a first separator, the second connecting strip, and a second separator to form a multi-layer structure strip;
the winding procedure comprises: winding the multi-layer structure strip to form a battery cell, and cutting at a connection location between the first separator, the first connecting strip, the second separator, and the second connecting strip to start winding a next battery cell;
wherein the first connecting strip and the second connecting strip are both porous-structured connecting strips.

Further, in some embodiments of the present invention, in the combining procedure, the feeding speeds of the first separator and the second separator are both not less than 600 mm/s.

Further, in some embodiments of the present invention, the porosities of the first connecting strip and the second connecting strip are both 15% to 70%, and the average pore diameters thereof are both 10-50 µm.

Further, in some embodiments of the present invention, the first connecting strip, the first separator, the second connecting strip, and the second separator are combined by hot-press combining, cold-press combining, bonding, or electrostatic combining; and/or
the combining mode between the first connecting strip and the tail of the first cathode sheet segment and the head of the second cathode sheet segment is selected from bonding, cold-press combining, or hot-press combining; the combining mode between the second connecting strip and the tail of the first anode sheet segment and the head of the second anode sheet segment is selected from bonding, cold-press combining, or hot-press combining.

Further, in some embodiments of the present invention, the first connecting strip and the second connecting strip are both separator connecting strips made of a material identical to that of the separator.

Further, in some embodiments of the present invention, in the combining procedure, the first cathode sheet segment and the second cathode sheet segment are not combined with the first separator; and the first anode sheet segment and the second anode sheet segment are not combined with the second separator.

Further, in some embodiments of the present invention, the widths of the first connecting strip and the second connecting strip are both not less than 95% of the width of the electrode sheet and not greater than the width of the separator.

Further, in some embodiments of the present invention,
the combining procedure comprises: combining the first connecting strip with the first separator to obtain a first multi-layer structure, and combining the second connecting strip with the second separator to obtain a second multi-layer structure; and
combining the first separator with the second connecting strip, so that the first multi-layer structure and the second multi-layer structure are combined; the combining region of the first multi-layer structure and the second multi-layer structure does not exceed a vertical projection region of the combining region of the first connecting strip and the first separator onto the combining region of the second connecting strip and the second separator.

Further, in some embodiments of the present invention, the upper and lower sides of the first cathode sheet segment and the second cathode sheet segment are both connected by the first connecting strip at the tail of the first cathode sheet segment and the head of the second cathode sheet segment, and the first connecting strips located on both sides of the tail of the first cathode sheet segment and the head of the second cathode sheet segment are combined; and/or
the upper and lower sides of the first anode sheet segment and the second anode sheet segment are both connected by the second connecting strip at the tail of the first anode sheet segment and the head of the second anode sheet segment, and the second connecting strips located on both sides of the tail of the first anode sheet segment and the head of the second anode sheet segment are combined.

Further, in some embodiments of the present invention, a first protective patch is connected at a connection location between the first connecting strip and the tail of the first cathode sheet segment, so that the first protective patch partially connects the first connecting strip and partially connects the first cathode sheet segment; and
a second protective patch is connected at a connection location between the second connecting strip and the tail of the first anode sheet segment, so that the second protective patch partially connects the second connecting strip and partially connects the first anode sheet segment.

Further, in some embodiments of the present invention, the combining length between the first connecting strip and the tail of the first cathode sheet segment does not exceed 1.5 times the outer circle perimeter of the wound battery cell core.

The combining length between the first connecting strip and the head of the second cathode sheet segment does not exceed 1.5 times the perimeter of a winding needle used for winding the wound battery cell; and the combining length between the second connecting strip and the head of the second anode sheet segment does not exceed 1.5 times the perimeter of the winding needle used for winding the wound battery cell.

Further, in some embodiments of the present invention, the first connecting strip is combined with the head of the second anode sheet segment, and the combining length between the first connecting strip and the second anode sheet segment does not exceed the perimeter of the winding needle for winding.

Further, in some embodiments of the present invention, a third protective patch is connected at a connection location between the first connecting strip and the head of the second cathode sheet segment, so that the third protective patch partially connects the first connecting strip and partially connects the second cathode sheet segment; a fourth protective patch is connected at a connection location between the second connecting strip and the head of the second anode sheet segment, so that the fourth protective patch partially connects the second connecting strip and partially connects the second anode sheet segment; and/or
first protective patches are adhered to the upper and lower sides of the first cathode sheet segment; second protective patches are adhered to the upper and lower sides of the second anode sheet segment; and/or
first protective patches are adhered to the upper and lower sides of the first cathode sheet segment, and third protective patches are adhered to the upper and lower sides of the second cathode sheet segment; second protective patches are adhered to the upper and lower sides of the second anode sheet segment; and fourth protective patches are adhered to the upper and lower sides of the second anode sheet segment.

Further, in some embodiments of the present invention, in the connection procedure, the first cathode sheet segment and the second cathode sheet segment are in a state of uniform-speed feeding, and the first connecting strip is used to connect the tail of the first cathode sheet segment and the head of the second cathode sheet segment; and the first anode sheet segment and the second anode sheet segment are in a state of uniform-speed feeding, and the second connecting strip is used to connect the tail of the first anode sheet segment and the head of the second anode sheet segment;
in the combining procedure, the feeding speeds of the first connecting strip, the second connecting strip, the first separator, and the second separator are all not less than 600 mm/s; and
in the winding procedure, the winding speed of the multi-layer structure of the battery cell is not less than 600 mm/s.

Further, in some embodiments of the present invention, the feeding speeds of the first separator and the second separator in the combining procedure and the winding procedure are uniform, and the feeding speeds of the first cathode sheet segment, the second cathode sheet segment, the first anode sheet segment, and the second anode sheet segment in the combining procedure and the winding procedure are uniform.

In a second aspect, the present invention further provides a wound battery cell, wherein the wound battery cell is a battery cell core wound by the high-speed winding process according to any one of the first aspect.

### Beneficial Effects of the present invention:

The present invention provides a winding process that can achieve high-speed winding of battery cells. In this winding process, after the electrode sheet is cut, a connecting strip is used to connect the first electrode sheet segment and the second electrode sheet segment obtained after cutting, and during the feeding process, the connecting strip is combined with the separator, so that the cut first electrode sheet segment, the second electrode sheet segment, and the separator form an integral whole and can be synchronously traction-fed. This avoids speed adjustment and winding feeding adjustment caused by traction force differences and feeding speed differences between the cut electrode sheet and separator. There is no need to adjust the speeds of the first electrode sheet segment, the second electrode sheet segment, and the separator during winding feeding, or to increase the spacing between the first electrode sheet segment and the second electrode sheet segment. At the same time, the problem of the head of the second electrode sheet segment hanging in the air after the separator is cut is avoided, as well as the problems of bending, powder dropping, and difficult alignment caused by the lack of traction feeding. Furthermore, the connecting strip adopted in the present invention is a porous connecting strip, so that after the connecting strip is connected with the first electrode sheet segment, the second electrode sheet segment, and the separator, bubbles formed therein can be expelled during subsequent winding and battery operation temperature rise, avoiding the situation where bubbles cannot be expelled and cause bubbling and delamination between the connecting strip and the electrode sheet, between the electrode sheet and the separator, and between the connecting strip and the separator, resulting in degraded battery performance.

The high-speed winding process provided by the present invention not only improves the defects of slow winding speed, electrode sheet powder dropping, and bending and wrinkling caused by electrode sheet hanging in the air in the winding process of wound battery cells in the prior art, achieving continuous winding with a separator feeding speed of more than 600 mm/s and separation of wound battery cells without stopping or reducing speed; but also improves the defect of battery cell performance degradation caused by using connecting strips to connect cut electrode sheets in wound battery cells, ensuring high-speed winding of wound battery cells without significant degradation of battery cell performance.

### BRIEF DESCRIPTION OF THE DRAWINGS

FIG. 1 is a schematic flow diagram of a high-speed winding process provided by some embodiments of the present invention;
FIG. 2 is a structural schematic diagram of a connecting strip connecting a first electrode sheet segment and a second electrode sheet segment provided by some embodiments of the present invention;
FIG. 3 is a structural schematic diagram of a connecting strip connecting a first electrode sheet segment and a second electrode sheet segment provided by some embodiments of the present invention;
FIG. 4 is a structural schematic diagram of a connecting strip connecting a first electrode sheet segment and a second electrode sheet segment provided by some embodiments of the present invention; and
FIG. 5 is a schematic diagram of combining regions of a first connecting strip, a first cathode sheet segment, a second cathode sheet segment, a first separator, a second connecting strip, a first anode sheet segment, a second anode sheet segment, and a second separator in a high-speed winding process provided by some embodiments of the present invention;
   wherein 101 - cathode sheet feeding procedure, 102 - anode sheet feeding procedure, 103 - first connecting strip feeding procedure, 104 - second connecting strip feeding procedure, 200 - electrode sheet cutting procedure, 300 - electrode sheet connection procedure, 400 - combining procedure, 401 - first region, 402 - second region, 403 - third region, 404 - fourth region, 405 - fifth region, 406 - sixth region, 500 - winding procedure, 601 - first cathode sheet segment, 6011 - tail of the first cathode sheet segment, 6012 - first protective patch, 602 - second cathode sheet segment, 6021 - head of the second cathode sheet segment, 6022 - third protective patch, 603 - first anode sheet segment, 6031 - tail of the first anode sheet segment, 6032 - second protective patch, 604 - second anode sheet segment, 6041 - head of the second anode sheet segment, 6042 - fourth protective patch, 605 - first connecting strip, 606 - second connecting strip, 607 - first separator, 608 - second separator, 701 - electrostatic generator, 800 - buffer roller set, 900 - deviation correction component.

### DETAILED DESCRIPTION OF THE EMBODIMENTS

To better explain the present invention, the embodiments of the present invention are described in detail below with reference to the accompanying drawings, and the main content of the present invention is further illustrated by specific embodiments. However, the content of the present invention is not limited to the following embodiments.

In the description of the present invention, it should be understood that the terms "thickness", "upper", "lower" and the like indicating orientation or positional relationships are based on the orientation or positional relationships shown in the drawings, and are merely for the convenience of describing the present invention and simplifying the description, rather than indicating or implying that the referred device or element must have a specific orientation, be constructed and operated in a specific orientation, and therefore should not be construed as a limitation on the present invention. In addition, the meaning of the term "a plurality of" is two or more, unless otherwise specifically defined.

The disclosure below provides many different embodiments or examples for implementing different structures of the present invention. To simplify the disclosure of the present invention, components and settings of specific examples are described below. Of course, they are merely examples, and are not intended to limit the present invention. In addition, the present invention can repeat reference numerals and/or reference letters in different examples, and this repetition is for the purpose of simplification and clarity, and does not in itself indicate the relationship between the various embodiments and/or settings discussed. In addition, the present invention provides various specific examples of processes and materials, but those of ordinary skill in the art can be aware of the application of other processes and/or the use of other materials.

Due to the structural design characteristics of wound battery cells in which the positive electrode sheet, the negative electrode sheet, and the separator are not aligned at the starting end and the finishing end of the battery cell, the positive electrode sheet, the negative electrode sheet, and the separator cannot be synchronously fed and synchronously wound into the battery cell during the winding process of the wound battery cell. During the winding process, the speeds of the positive electrode sheet and the negative electrode sheet need to be adjusted, and the spacing between adjacent positive electrode sheets and negative electrode sheets needs to be increased. This requires stopping and reducing speed during feeding into the winding machine, and accelerating during the winding process to match the feeding speed of the separator, thus having a significant impact on the winding efficiency of the battery cell. To improve the winding efficiency of wound battery cells, those skilled in the art have been committed to whether the feeding process of the winding machine can be performed without reducing speed. To this end, it has been proposed to cut the positive electrode sheet and the negative electrode sheet before feeding, and increase the spacing between adjacent positive electrode sheets and negative electrode sheets, so as to adjust the length difference between the positive electrode sheet, the negative electrode sheet, and the separator before feeding; and in order to achieve synchronous feeding of the positive electrode sheet, the negative electrode sheet, and the separator, it has been proposed to provide adhesive tape between adjacent positive electrode sheets and between adjacent negative electrode sheets, to drive the positive electrode sheet, the negative electrode sheet, and the separator to continuously and synchronously feed, thereby achieving continuous winding. At the same time, through this process, the positive electrode sheet and the separator, and the negative electrode sheet and the separator are connected by adhesive tape, and the heads of the positive electrode sheet and the negative electrode sheet can also be wrapped to reduce the powder dropping of the positive electrode sheet and the negative electrode sheet.

However, the inventors have found during research and development that the electrical performance of wound battery cells formed by connecting the positive electrode sheet and the negative electrode sheet by adhesive tape and then winding decreases, and after a period of use, the performance degradation of the wound battery cells is obvious. In this regard, the inventors further explored the causes of the performance degradation of the wound battery cells and found that: the wound battery cells formed by connecting the positive electrode sheet and the negative electrode sheet by adhesive tape and then winding are more prone to bubbling and delamination after a period of use; and the locations where these problems first appear are mostly concentrated at the connection locations between the adhesive tape and the positive electrode sheet, the negative electrode sheet, and the separator. This poses a great limitation on the promotion and use of wound battery cells formed by winding positive electrode sheets and negative electrode sheets connected by adhesive tape. The inventors further studied and found that when the positive electrode sheets, the negative electrode sheets, and the separators are connected by connecting strips, some fine bubbles tend to appear during the winding process. Some of these bubbles can be expelled during the winding process, but it is difficult to completely expel them, especially the fine bubbles formed when the positive electrode sheet and the connecting strip, the negative electrode sheet and the connecting strip, and the separator and the connecting strip are connected in a bonding manner. These bubbles have an impact on the battery performance of wound battery cells, especially during long-term use. Moreover, due to the poor ion penetration of adhesive tape, this also affects the performance of wound battery cells.

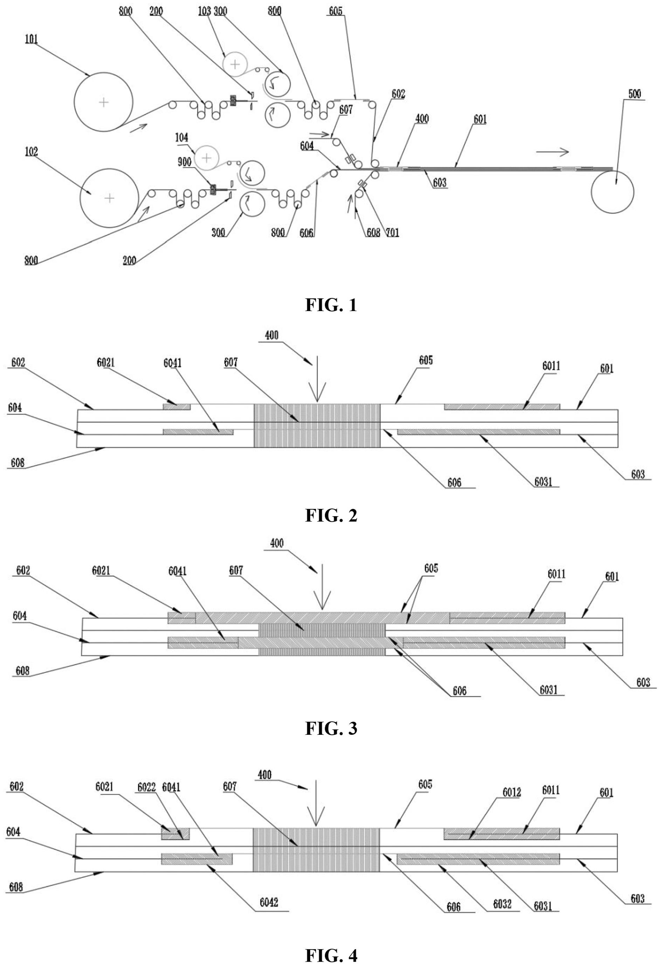

On this basis, the inventors propose a new high-speed winding process. Referring to FIG. 1, the process comprises the following continuously performed procedures: an electrode sheet cutting procedure 200, an electrode sheet connection procedure 300, a combining procedure 400, and a winding procedure 500;
wherein the electrode sheet cutting procedure comprises: according to the required length of the electrode sheet in the wound battery cell structure, cutting the electrode sheet to form adjacent first electrode sheet segments and second electrode sheet segments, and increasing the spacing between the first electrode sheet segment and the second electrode sheet segment;
the connection procedure comprises: using a connecting strip to connect the tail of the first electrode sheet segment and the head of the second electrode sheet segment;
the combining procedure comprises: combining the connecting strip with the separator to form a multi-layer structure strip; and
the winding procedure comprises: winding the multi-layer structure strip of the battery cell to form a battery cell, cutting at the connection location between the separator and the connecting strip, and simultaneously starting to wind a next battery cell;
wherein the connecting strip is a porous-structured connecting strip, and the porous structure on the connecting strip allows fine bubbles appearing at the connection location between the connecting strip and the electrode sheet and the connection location between the connecting strip and the separator to be easily expelled during the winding process, and also to be easily squeezed out during the use of the wound battery cell, avoiding the occurrence of bubbling and delamination. The porous structure can also provide a path for ion penetration, improving the defect of performance degradation of wound battery cells caused by the connecting strip, ensuring that high-speed winding is achieved while the performance of the wound battery cell does not decrease or does not significantly decrease, so that the winding process has high production efficiency and the battery cell product quality is stable and excellent.

It should be noted that the porous structure of the connecting strip adopted in the present invention is a porous structure with an average pore diameter at the micron level and relatively uniformly distributed pores. Preferably, the porosity of the connecting strip is 15% to 70%, the average pore diameter is 10 µm to 50 µm, more preferably, the porosity thereof is 25% to 50%, and the average pore diameter is 15 µm to 30 µm, to ensure the strength and ion penetration of the connecting strip.

Preferably, the porosity and average pore diameter of the connecting strip are the same as or close to those of the separator.

More preferably, the connecting strip is a separator connecting strip made of a material identical to that of the separator, and the thickness thereof is the same as or less than that of the separator, reducing the increase in the thickness of the battery cell structure caused by the connecting strip. In this embodiment, since the material of the connecting strip is the same as that of the separator, the porosity and average pore diameter are the same or similar, and the elastic modulus is also the same as or similar to that of the separator. After the connecting strip is connected with the electrode sheet and the connecting strip is connected with the separator, when feeding or winding, the feeding speed or winding speed of the connecting strip and the separator are the same, and the tension is also the same. This can further reduce bubble formation between the connecting strip and the electrode sheet and between the connecting strip and the separator, and can also improve the bending of the electrode sheet, further ensuring or even improving the electrical performance and quality stability of the wound battery cell. Moreover, since the connecting strip and the separator are film layers of the same material, in fact, the wound battery cell formed by winding does not introduce any other material/structure film layer, and therefore the performance of the wound battery cell formed is not affected by the introduction of other materials/structures. In addition, the impact on ion penetration of the wound battery cell is also minimal. At the same time, since the tension of the connecting strip and the separator is the same or infinitely close to the same, in the winding process, the composite structure layer formed by the electrode sheet, the connecting strip, and the separator can greatly increase the feeding speed. In the present invention, in the combining procedure, the feeding speed of the separator is not less than 600 mm/s, and the feeding speed of the electrode sheet and the connecting strip is also infinitely close to the feeding speed of the separator. Preferably, in the present invention, the feeding speed of the separator in the combining procedure can reach 1000 mm/s, more preferably, the feeding speed of the separator in the combining procedure can reach more than 2000 mm/s, achieving extremely high-speed continuous winding.

In some embodiments, the connecting strip and the separator are combined by hot-press combining, cold-press combining, bonding, or electrostatic combining. The combining mode between the connecting strip and the tail of the first electrode sheet segment and the head of the second electrode sheet segment is selected from bonding, cold-press combining, or hot-press combining.

Preferably, when the material of the connecting strip is the same as the material of the separator, the connecting strip and the separator are combined by hot-press combining, cold-press combining, or electrostatic combining, more preferably hot-press combining. According to the principle of similarity and compatibility and the adhesiveness inherently present in the material of the separator, the bonding strength is better when the connecting strip and the separator are combined by hot-press combining, and there is no need to separately provide equipment and procedures for applying an adhesive agent, which is conducive to further increasing the winding speed. Moreover, if an additional adhesive layer is applied to achieve bonding between the connecting strip and the separator or the electrode sheet, usually only one side can achieve good bonding with the electrode sheet or the separator. This is because when both sides of the connecting strip need to be coated with an adhesive agent, both sides of the connecting strip need to be coated with the adhesive agent, which easily causes the structural member for connecting strip feeding (such as a roller) to also be coated with the adhesive agent. This is not conducive to the connecting strip separating from the connecting strip feeding structural member to bond with the electrode sheet or the separator, and easily causes the connecting strip to wrinkle and bubble.

It should also be noted that when the material of the connecting strip is the same as the material of the separator, this is also conducive to flying cutting at the combining location of the connecting strip and the separator of the multi-layer structure of the battery cell formed by the connecting strip, the electrode sheet, and the separator, avoiding the problem that the hot cutting temperature is inconsistent because the materials of the connecting strip and the separator are different, making hot cutting unusable; and even if cold cutting is used, since the strength required for cold cutting also has a certain difference, there will be subtle differences in the cutting time and retraction position after the flying cutting location is cut, which in turn causes the two ends of the wound battery cell to be actually unable to align.

In some embodiments, in the connection procedure, the first electrode sheet segment and the second electrode sheet segment are in a state of uniform-speed feeding, and the connecting strip is used to connect the tail of the first electrode sheet segment and the head of the second electrode sheet segment to connect the first electrode sheet segment and the second electrode sheet segment.

In the combining procedure, the feeding speed of the connecting strip and the separator is not less than 600 mm/s; in the winding procedure, the winding speed of the multi-layer structure of the battery cell formed by the connecting strip, the electrode sheet, and the separator is not less than 600 mm/s, preferably not less than 1000 mm/s, and more preferably can reach 2000 mm/s, so that in the winding process, the overall winding speed of the multi-layer structure of the battery cell is not less than 600 mm/s.

Preferably, by adopting the winding process of the present invention, the feeding speed of the connecting strip and the separator in the combining procedure can be increased to not less than 1000 mm/s, and can even be increased to 2000 mm/s; the winding speed of the multi-layer structure of the battery cell formed by the connecting strip, the electrode sheet, and the separator in the winding procedure can also be synchronously increased to more than 1000 mm/s, and can even be increased to more than 2000 mm/s, and stable continuous winding can still be achieved.

In the winding process of the present invention, the overall winding speed of the multi-layer structure of the battery cell can reach 2300 mm/s.

In some embodiments, the feeding speed of the separator in the combining procedure and the winding procedure is uniform, and the feeding speed of the electrode sheet in the combining procedure and the winding procedure is uniform.

It should be noted that the "uniform speed" in the winding procedure provided by the present invention should be understood as the speed being similar or infinitely approaching the speed remaining constant, rather than being understood as the speed remaining absolutely constant in an absolute sense; and the "uniform feeding speed" provided by the present invention should be understood as the feeding speed of the film layer not undergoing significant changes in a certain procedure or certain procedures. For example, "the feeding speed of the separator in the combining procedure and the winding procedure is uniform" should be understood as the feeding speed of the separator in the combining procedure not undergoing significant changes during continuous winding, the feeding speed of the separator in the winding procedure not undergoing significant changes during continuous winding, and the feeding speed of the separator in the combining procedure and the feeding speed of the separator in the winding procedure being similar or infinitely approaching each other, that is, the feeding speed of the separator from after feeding to before winding cutting remains unchanged. "The feeding speed of the electrode sheet in the combining procedure and the winding procedure is uniform" should be understood as the feeding speed of the electrode sheet (cathode sheet/anode sheet) in the combining procedure not undergoing significant changes during continuous winding, the feeding speed of the electrode sheet (cathode sheet/anode sheet) in the winding procedure not undergoing significant changes during continuous winding, and the feeding speed of the electrode sheet (cathode sheet/anode sheet) in the combining procedure and the feeding speed of the electrode sheet (cathode sheet/anode sheet) in the winding procedure being similar or infinitely approaching each other. In addition, the connecting strip in the combining procedure and the winding procedure also has a uniform feeding speed.

In some embodiments, in the combining procedure, the first electrode sheet segment and the second electrode sheet segment are not combined with the separator, and the electrode sheet is combined with the separator only through the connecting strip, so that the electrode sheet and the separator form a multi-layer structure of the battery cell after the combining procedure, to maintain the freedom of the first electrode sheet segment and the second electrode sheet segment as much as possible, facilitating deviation correction and tension release. This also improves the defects of the electrode sheet head hanging in the air because the electrode sheet is not connected with the separator, and the difficulty in alignment after the electrode sheet and the separator are combined into an integral whole. It also improves the defect that the electrode sheet is prone to bending and wrinkling due to tension problems.

In other embodiments, the tail of the first electrode sheet segment is not connected with the separator; the head of the second electrode sheet segment is connected with the separator, that is, the tail of the first electrode sheet segment still maintains its freedom, facilitating deviation correction and tension release of the electrode sheet; and the head thereof is connected with the separator, to enhance the connection strength between the electrode sheet and the separator and reduce the risk of detachment.

It should be noted that the length of the "head" in the present invention does not exceed 1.5 times the perimeter of the winding needle used for winding the wound battery cell, and is not less than the perimeter of the winding needle used for winding the wound battery cell. It can be understood that the perimeter ≤ the length of the "head" ≤ 1.5 times the perimeter. The "tail" refers to other parts of the electrode sheet in the length direction besides the "head".

In some embodiments, the width of the connecting strip is not less than 95% of the width of the electrode sheet and not greater than the width of the separator, to ensure the connection strength between the connecting strip and the electrode sheet and the separator, and at the same time achieve a good wrapping effect on the head and tail of the electrode sheet to reduce powder dropping. At the same time, this also avoids the connecting strip being too wide and protruding beyond the separator to form side wrapping, which affects the performance of the wound battery cell.

In some embodiments, referring to FIG. 2, the electrode sheet comprises a cathode sheet and an anode sheet, the first electrode sheet segment comprises a first cathode sheet segment 601 and a first anode sheet segment 603; the second electrode sheet segment comprises a second cathode sheet segment 602 and a second anode sheet segment 604; the separator comprises a first separator 607 and a second separator 608; and the connecting strip comprises a first connecting strip 605 and a second connecting strip 606;
the connection procedure comprises: connecting the tail 6011 of the first cathode sheet segment with the head 6021 of the second cathode sheet segment by the first connecting strip 605; and connecting the tail 6031 of the first anode sheet segment and the head 6041 of the second anode sheet segment by the second connecting strip 606;
the combining procedure comprises: combining the first connecting strip 605 with the first separator 607 to obtain a first multi-layer structure, and combining the second connecting strip 606 with the second separator 608 to obtain a second multi-layer structure; and
combining the first separator with the second connecting strip, so that the first multi-layer structure and the second multi-layer structure are combined; and the combining region of the first multi-layer structure and the second multi-layer structure does not exceed a vertical projection region of the combining region of the first connecting strip and the first separator onto the combining region of the second connecting strip and the second separator.

The combining region length of the first connecting strip 605 and the first separator 607 is less than the length from the tail of the first cathode sheet segment to the head of the second cathode sheet segment, so that the combining region does not contact the tail of the first cathode sheet segment or the head of the second cathode sheet segment, affecting the freedom thereof; the combining region length of the second connecting strip 606 and the second separator 608 is less than the length from the tail of the first anode sheet segment to the head of the second anode sheet segment, so that the combining region does not contact the tail of the first anode sheet segment or the head of the second anode sheet segment, affecting the freedom thereof.

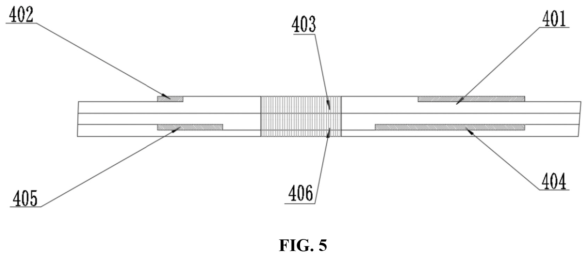

For example, as shown in FIG. 5, the combining region of the first connecting strip and the tail of the first cathode sheet segment is a first region 401, the combining region with the head of the second cathode sheet segment is a second region 402, and the combining region of the first connecting strip and the first separator is a third region 403; the combining region of the second connecting strip and the tail of the first anode sheet segment is a fourth region 404, the combining region with the head of the second anode sheet segment is a fifth region 405, and the combining region of the second connecting strip and the second separator is a sixth region 406; there is a gap between the first region and the third region, and there is also a gap between the second region and the third region; and there is a gap between the fourth region and the sixth region, and there is also a gap between the fifth region and the sixth region.

It should be noted that the first cathode sheet segment and the second cathode sheet segment are cut and the spacing between the first cathode sheet segment and the second cathode sheet segment is increased by a cutting procedure before the connection procedure and a buffer roller set provided before a cutting component used in the cutting procedure. Similarly, the first anode sheet segment and the second anode sheet segment also increase the spacing between the first anode sheet segment and the second anode sheet segment through the cutting procedure before the connection procedure. In the present invention, the cutting procedure before the connection procedure is prior art and will not be described in detail herein.

In addition, the winding process further includes a cathode sheet feeding procedure 101 and an anode sheet feeding procedure 102 before the cutting procedure, and further includes a first separator feeding procedure and a second separator feeding procedure before the combining procedure; and further includes a first connecting strip feeding procedure 103 and a second connecting strip feeding procedure 104 before the connection procedure, wherein the cathode sheet feeding procedure 101, the anode sheet feeding procedure 102, the first separator feeding procedure, and the second separator feeding procedure are prior art in the art and will not be described in detail herein. The first connecting strip feeding procedure 103 and the second connecting strip feeding procedure 104 can refer to the cathode sheet feeding procedure 101 and/or the anode sheet feeding procedure 102, that is: a reel wound with the first connecting strip and a reel wound with the second connecting strip are used, the rotation of the reel of the first connecting strip and the reel of the second connecting strip is controlled by a motor, the first connecting strip and the second connecting strip are fed at timed intervals, and pressed onto the corresponding cathode sheet/anode sheet by a pressure roller, to achieve the combining of the first connecting strip with the cathode sheet and the second connecting strip with the anode sheet. The first connecting strip and the second connecting strip can be first connecting strips and second connecting strips pre-cut to a required length, or a cutting component can be provided before the pressure roller used for combining, to cut the first connecting strip and the second connecting strip into a predetermined length.

It should be noted that in the present invention, the first cathode sheet segment and the second cathode sheet segment can be provided with the first connecting strip on a single side or on both sides. Similarly, the first anode sheet segment and the second anode sheet segment can also be provided with the second connecting strip on a single side or on both sides. It is preferable to provide the first connecting strip on both sides of the first cathode sheet segment and the second cathode sheet segment, and to provide the second connecting strip on both sides of the first anode sheet segment and the second anode sheet segment, to increase the traction capability of the first connecting strip and the second connecting strip on the second cathode sheet segment and the second anode sheet segment, and to avoid the detachment of the first connecting strip and the second connecting strip.

When the first connecting strip is provided on both sides of the first cathode sheet segment and the second cathode sheet segment, and the second connecting strip is provided on both sides of the first anode sheet segment and the second anode sheet segment, specific structural examples thereof are as follows.

Referring to FIG. 2, the upper and lower sides of the first cathode sheet segment 601 and the second cathode sheet segment 602 are both connected by the first connecting strip 605 at the tail 6011 of the first cathode sheet segment and the head 6021 of the second cathode sheet segment, and the first connecting strips 605 located on both sides of the tail 6011 of the first cathode sheet segment and the head 6021 of the second cathode sheet segment are combined; the upper and lower sides of the first anode sheet segment 603 and the second anode sheet segment 604 are both connected by the second connecting strip 606 at the tail 6031 of the first anode sheet segment and the head 6041 of the second anode sheet segment, and the second connecting strips 606 located on both sides of the tail 6031 of the first anode sheet segment and the head 6041 of the second anode sheet segment are combined.

In other embodiments, a protective patch can be provided at the connection location between the connecting strip and the electrode sheet segment to increase the combining strength of the connecting strip and the electrode sheet segment. For example, the specific structure can be: referring to FIG. 3 and FIG. 4, a first protective patch 6012 is connected at the connection location between the first connecting strip 605 and the tail 6011 of the first cathode sheet segment, so that the first protective patch 6012 partially connects the first connecting strip 605 and partially connects the first cathode sheet segment 601, to further enhance the connection strength between the first connecting strip and the first cathode sheet segment; a second protective patch 6032 is connected at the connection location between the second connecting strip 606 and the tail 6031 of the first anode sheet segment, so that the second protective patch 6032 partially connects the second connecting strip 606 and partially connects the first anode sheet segment 603, to further enhance the connection strength between the second connecting strip and the first anode sheet segment.

For example, the specific structure can also be:
a third protective patch 6022 is connected at the connection location between the first connecting strip 605 and the head 6021 of the second cathode sheet segment, so that the third protective patch partially connects the first connecting strip and partially connects the second cathode sheet segment; a fourth protective patch 6042 is connected at the connection location between the second connecting strip 606 and the head 6041 of the second anode sheet segment, so that the fourth protective patch partially connects the second connecting strip and partially connects the second anode sheet segment; first protective patches are adhered to the upper and lower sides of the first cathode sheet segment; second protective patches are adhered to the upper and lower sides of the second anode sheet segment; first protective patches are adhered to the upper and lower sides of the first cathode sheet segment, and third protective patches are adhered to the upper and lower sides of the second cathode sheet segment; and fourth protective patches are adhered to the upper and lower sides of the second anode sheet segment.

In some embodiments, the combining length between the first connecting strip and the tail of the first cathode sheet segment does not exceed 1.5 times the outer circle perimeter of the wound battery cell core, to integrate the cathode corner separator composite function, ensure the battery cell gap voltage difference, and reduce the re-applied corner tape function. Preferably, the combining length between the first connecting strip and the tail of the first cathode sheet segment does not exceed the outer circle perimeter of the wound battery cell.

In some embodiments, the combining length between the first connecting strip and the head of the second cathode sheet segment does not exceed 1.5 times the perimeter of the winding needle used for winding the wound battery cell; the combining length between the second connecting strip and the head of the second anode sheet segment does not exceed 1.5 times the perimeter of the winding needle used for winding the wound battery cell. Preferably, the combining length between the first connecting strip and the head of the second cathode sheet segment is not less than the perimeter of the winding needle used for winding the wound battery cell; and the combining length between the second connecting strip and the head of the second anode sheet segment is not less than the perimeter of the winding needle used for winding the wound battery cell, to avoid the electrode sheet contacting the winding needle and affecting the battery cell performance.

In a second aspect, the present invention further provides a wound battery cell, wherein the wound battery cell is a battery cell core wound by the high-speed winding process according to any one of the first aspect, the starting end and the finishing end of the wound battery cell are both flush at the cutting location of the first connecting strip, the second connecting strip, the first separator, and the second separator, the tension of the obtained wound battery cell is controlled to be the same or approximately the same, so that each layer, especially the cathode sheet and/or the anode sheet, is not prone to bending and wrinkling, providing a foundation for the performance stability of the wound battery cell. In particular, when the first connecting strip and the second connecting strip are also separators or the material thereof is the same as the material of the separator, the performance of the wound battery cell can be maintained, and since the bending and wrinkling prone to occur during the electrode sheet winding process are improved, the performance stability of the obtained wound battery cell is even better.

Finally, it should be noted that the above embodiments are only used to illustrate the technical solutions of the present invention, rather than to limit the same. Although the present invention has been described in detail with reference to the foregoing embodiments, those of ordinary skill in the art should understand that: modifications can still be made to the technical solutions described in the foregoing embodiments, or equivalent replacements can be made to some or all of the technical features therein; and these modifications or replacements do not cause the essence of the corresponding technical solutions to depart from the scope of the technical solutions of the embodiments of the present invention.

### INDUSTRIAL APPLICABILITY

In summary, the present invention provides a high-speed winding process and a wound battery cell therefrom, achieving continuous winding with a separator feeding speed of more than 600 mm/s and separation of wound battery cells without stopping or reducing speed, and ensuring high-speed winding of wound battery cells without significant degradation of battery cell performance.

## Claims

1. A high-speed winding process, **characterized in that**, the high-speed winding process comprises following continuously performed procedures: an electrode sheet connection procedure, a combining procedure, and a winding procedure;
wherein the connection procedure comprises: using a first connecting strip to connect a tail of a first cathode sheet segment and a head of a second cathode sheet segment, and using a second connecting strip to connect a tail of a first anode sheet segment and a head of a second anode sheet segment;
the combining procedure comprises: combining the first connecting strip, a first separator, the second connecting strip, and a second separator to form a multi-layer structure strip; and
the winding procedure comprises: winding the multi-layer structure strip to form a battery cell, and cutting at a connection location between the first separator, the first connecting strip, the second separator, and the second connecting strip to start winding a next battery cell;
wherein the first connecting strip and the second connecting strip are both porous-structured connecting strips.

2. The high-speed winding process according to claim 1, wherein in the combining procedure, the feeding speeds of the first separator and the second separator are both not less than 600 mm/s.

3. The high-speed winding process according to claim 1 or 2, wherein the porosities of the first connecting strip and the second connecting strip are both 15% to 70%, and the average pore diameters thereof are both 10-50 µm.

4. The high-speed winding process according to any one of claims 1-3, wherein the first connecting strip, the first separator, the second connecting strip, and the second separator are combined by hot-press combining, cold-press combining, bonding, or electrostatic combining; and/or
the first connecting strip and the tail of the first cathode sheet segment and the head of the second cathode sheet segment are combined by a combining mode selected from bonding, cold-press combining, or hot-press combining; and
the second connecting strip and the tail of the first anode sheet segment and the head of the second anode sheet segment are combined by a combining mode selected from bonding, cold-press combining, or hot-press combining.

5. The high-speed winding process according to any one of claims 1-4, wherein the first connecting strip and the second connecting strip are both separator connecting strips made of a material identical to that of the separator.

6. The high-speed winding process according to any one of claims 1-5, wherein in the combining procedure, the first cathode sheet segment and the second cathode sheet segment are not combined with the first separator; and the first anode sheet segment and the second anode sheet segment are not combined with the second separator.

7. The high-speed winding process according to any one of claims 1-6, wherein the widths of the first connecting strip and the second connecting strip are both not less than 95% of the width of the first cathode sheet segment and not greater than the width of the first separator.

8. The high-speed winding process according to any one of claims 1-7, wherein
the combining procedure comprises: combining the first connecting strip with the first separator to obtain a first multi-layer structure, and combining the second connecting strip with the second separator to obtain a second multi-layer structure; and
combining the first separator with the second connecting strip, so that the first multi-layer structure and the second multi-layer structure are combined; the combining region of the first multi-layer structure and the second multi-layer structure does not exceed a vertical projection region of the combining region of the first connecting strip and the first separator onto the combining region of the second connecting strip and the second separator.

9. The high-speed winding process according to claim 8, wherein the upper and lower sides of the first cathode sheet segment and the second cathode sheet segment are both connected by the first connecting strip at the tail of the first cathode sheet segment and the head of the second cathode sheet segment, and the first connecting strips located on both sides of the tail of the first cathode sheet segment and the head of the second cathode sheet segment are combined; and/or
the upper and lower sides of the first anode sheet segment and the second anode sheet segment are both connected by the second connecting strip at the tail of the first anode sheet segment and the head of the second anode sheet segment, and the second connecting strips located on both sides of the tail of the first anode sheet segment and the head of the second anode sheet segment are combined.

10. The high-speed winding process according to claim 8 or 9, wherein a first protective patch is connected at a connection location between the first connecting strip and the tail of the first cathode sheet segment, so that the first protective patch partially connects the first connecting strip and partially connects the first cathode sheet segment; and
a second protective patch is connected at a connection location between the second connecting strip and the tail of the first anode sheet segment, so that the second protective patch partially connects the second connecting strip and partially connects the first anode sheet segment.

11. The high-speed winding process according to any one of claims 1-10, wherein the combining length between the first connecting strip and the tail of the first cathode sheet segment does not exceed 1.5 times the outer circle perimeter of the wound battery cell.

12. The high-speed winding process according to claim 11, wherein the combining length between the first connecting strip and the head of the second cathode sheet segment does not exceed 1.5 times the perimeter of a winding needle used for winding the wound battery cell; and the combining length between the second connecting strip and the head of the second anode sheet segment does not exceed 1.5 times the perimeter of the winding needle used for winding the wound battery cell.

13. The high-speed winding process according to claim 12, wherein a third protective patch is connected at a connection location between the first connecting strip and the head of the second cathode sheet segment, so that the third protective patch partially connects the first connecting strip and partially connects the second cathode sheet segment; a fourth protective patch is connected at a connection location between the second connecting strip and the head of the second anode sheet segment, so that the fourth protective patch partially connects the second connecting strip and partially connects the second anode sheet segment; and/or
first protective patches are adhered to the upper and lower sides of the first cathode sheet segment; second protective patches are adhered to the upper and lower sides of the second anode sheet segment; and/or
first protective patches are adhered to the upper and lower sides of the first cathode sheet segment, and third protective patches are adhered to the upper and lower sides of the second cathode sheet segment; second protective patches are adhered to the upper and lower sides of the second anode sheet segment; and fourth protective patches are adhered to the upper and lower sides of the second anode sheet segment.

14. The high-speed winding process according to any one of claims 1-13, wherein in the connection procedure, the first cathode sheet segment and the second cathode sheet segment are in a state of uniform-speed feeding, and the first connecting strip is used to connect the tail of the first cathode sheet segment and the head of the second cathode sheet segment; the first anode sheet segment and the second anode sheet segment are in a state of uniform-speed feeding, and the second connecting strip is used to connect the tail of the first anode sheet segment and the head of the second anode sheet segment;
in the combining procedure, the feeding speeds of the first connecting strip, the second connecting strip, the first separator, and the second separator are all not less than 600 mm/s; and
in the winding procedure, the winding speed of the multi-layer structure of the battery cell is not less than 600 mm/s.

15. The high-speed winding process according to claim 14, wherein the feeding speeds of the first separator and the second separator in the combining procedure and the winding procedure are uniform, and the feeding speeds of the first cathode sheet segment, the second cathode sheet segment, the first anode sheet segment, and the second anode sheet segment in the combining procedure and the winding procedure are uniform.

16. A wound battery cell, wherein the wound battery cell is a battery cell core wound by the high-speed winding process according to any one of claims 1-15.
